# EUROPEAN PATENT APPLICATION

(11) **EP 4 671 845 A1**
(43) Date of publication of application: **31.12.2025**
(21) Application number: 24184768.0
(22) Date of filing: 26.06.2024
(51) Int. Cl.: G02B 21/34, G01N 1/31

(54) **DEVICE AND METHOD FOR IMAGING AND COVERSLIPPING**

(71) Applicant: Leica Biosystems Nussloch GmbH, 69226 Nussloch (DE)
(72) Inventor: Rapp, Michael, 68723 Oftersheim (DE)
(74) Representative: Schaumburg und Partner Patentanwälte mbB

(57) **Abstract**

A device (100, 200, 300) for imaging and coverslipping comprises a receiving position (102) configured to receive at least one sample carrier (408) configured to carry a sample, an imaging position (108, 108a, 108b, 108c) configured to receive the sample carrier (408), and an imaging unit (106, 106a, 106b, 106c) arranged at the imaging position (108, 108a, 108b, 108c). The imaging unit (106, 106a, 106b, 106c) is configured to image the sample through the sample carrier (408) when the sample carrier (408) is arranged in the imaging position (108, 108a, 108b, 108c). The device (100, 200, 300) further comprises a coverslipping unit (112, 112a, 112b, 112c) configured to apply a coverslip to the sample (408), and a transport unit (114) comprising at least one track (116, 116a, 116b, 116c). The transport unit (114) is configured to move the sample carrier (408) along the track (116, 116a, 116b, 116c) from the receiving position (102) to an imaging position (108, 108a, 108b, 108c), and from the imaging position (108, 108a, 108b, 108c) to the coverslipping unit (112, 112a, 112b, 112c).

## Description

### Technical field

A device for imaging and coverslipping is provided. Further, a method for imaging and coverslipping is provided.

### Background

Biological researchers and clinical specialists may view biological samples under a microscope to identify and analyze tissues or cells of the biological sample for research, diagnosis, or other purposes. The slides may be prepared by cutting a sample into many thin slices and placing the slices on one or more glass slides. A coverslip may be placed over the slide to protect or preserve the sample and/or equipment. The slide is then examined under a microscope.

### Summary

The proposed device for imaging and coverslipping comprises a receiving position configured to receive at least one sample carrier configured to carry a sample, an imaging position configured to receive the sample carrier, and an imaging unit arranged at the imaging position. The imaging unit is configured to image the sample through the sample carrier when the sample carrier is arranged in the imaging position. The device further comprises a coverslipping unit configured to apply a coverslip to the sample, and a transport unit comprising at least one track. The transport unit is configured to move the sample carrier relative to the track from the receiving position to an imaging position, and from the imaging position to the coverslipping unit.

As an example, the sample may be a biological sample, such as a tissue section generated from a tissue sample such as a biopsy. The biological sample may be generated as a tissue section by means of a microtome, for example. The sample carrier may be a (glass) microscope slide, for example. The sample carrier may also comprise a frame mounting a foil. The sample carrier is transparent or comprises a transparent section in order to enable imaging of the biological sample through the sample carrier. The coverslip is a thin piece of glass or plastic that is placed over the biological sample arranged on the sample carrier to protect the biological sample. The imaging device may be a high-resolution digital imaging device in particular.

The transport unit may move the sample carriers along the tracks. Multiple sample carriers may be moved along the track at the same time, making it possible to quickly process the sample carriers in sequence. However, the transport unit may also move other elements of the device while the sample carrier remains stationary on the track. For example, the transport unit may be configured to move at least one of the imaging unit, and the coverslipping unit.

The coverslipping unit may comprise a reservoir configured to store a liquid mounting medium, and a liquid applicator configured to apply the mounting medium to an area of the sample carrier, where the coverslip is to be applied. The coverslipping unit may further comprise a coverslip applicator, for example a robotic arm comprising a suction cup, configured to grab a coverslip from a coverslip depot and to apply the coverslip to the appropriate area of the sample carrier. The coverslipping unit may be an automatic coverslipping unit or a manual coverslipping unit.

For example, a mounting medium, such as a liquid adhesive or a resin in a solvent, is applied to adhere the coverslip to the sample. Thereby, the biological sample disposed between the coverslip and the sample carrier is preserved. For long-term storage and archival of the sample carrier, the mounting medium is typically hardened, for example by drying or UV-curing. However, drying or curing the mounting medium may take up to several days during which the mounting medium is still liquid. Applying the coverslip during this time may cause the mounting medium to leak from under the coverslip. The still liquid mounting medium may thereby come into contact with, for example, the objective of an imaging device during imaging and cause the objective to become unusable. Therefore, microscope slides covered in this way are imaged after the mounting medium has completely cured which can take up to several days. Further, applying the coverslip may form bubbles or similar artifacts under the coverslip which affect the imaging quality.

The proposed device implements a workflow in which the sample is imaged before the sample carrier is provided with a coverslip by the coverslipping unit. This makes it possible, for example, to generate a first image of a biological sample shortly after the sample has been stained. This first image may be sent to a pathologist immediately for analysis. This workflow is substantially faster than having to wait for the mounting medium to be cured before the sample can be imaged. Further, this image is essentially free of artifacts introduced by the coverslipping process, which may negatively affect image quality, and therefore the reliability of the analysis. Thus, the device makes it possible to provide high-quality images for an immediate analysis of the sample. The proposed device therefore enables the rapid processing of samples.

The preparation, imaging, and archiving of the biological sample can happen under significant time pressure. The proposed device reduces delays in sample preparation that can cascade down the workflow, impacting subsequent stages such as imaging and analysis, and ultimately delay decision making. At the same time, degradation of the biological sample such as tissue sections is reduced, for example ensuring the color fidelity of the biological sample, providing rapid turnaround times and timely information to decision makers (e.g., in clinical or research settings), and providing efficient processing according to strict protocols.

In an embodiment, the device comprises more than one imaging position and more than one imaging unit. Each imaging unit is arranged at one of the imaging positions and configured to image the sample through the sample carrier when the sample carrier is arranged in the imaging position above said imaging unit. The transport unit is configured to move the sample carrier from the receiving position to any one of the imaging positions, and from each of the imaging positions to the coverslipping unit. This embodiment makes it possible to image a number of different samples arranged on different sample carriers in parallel. This significantly speeds up the imaging process, making the device even more efficient in processing the samples. In such a parallel operating mode, the transport unit is configured to distribute the different sample carriers onto different imaging positions. The sample may also be imaged sequentially using a number of different imaging units, for example, to image the sample using different imaging modalities. In such a sequential operating mode, the transport unit is configured to sequentially move the sample carrier to different imaging positions which may be arranged sequentially along the track. The device may further comprise multiple parallel tracks, each comprising a number of different imaging positions arranged sequentially along the respective track.

In another embodiment, the transport unit comprises one track for each of the imaging positions. Each track runs from the receiving position to one of the imaging positions, and from this imaging position to the coverslipping unit. The transport unit is configured to move the sample carrier along each of the tracks. In this embodiment, the transport unit comprises multiple tracks, each track being associated with one of the imaging positions. The transport unit is configured to distribute the received sample carriers onto different tracks. Thus, the different sample carriers may be imaged at different imaging positions each, parallelizing the imaging step of the overall workflow. This makes the device very efficient in processing large numbers of samples.

In another embodiment, the device comprises more than one coverslipping unit. The transport unit is configured to move the sample carrier from the imaging position to any one of the coverslipping units. Providing multiple coverslipping units enables the device to provide a number of different sample carriers with coverslips at the same time. This speeds up the coverslipping process, making the device even more efficient in processing the samples. In such an operating mode, the transport unit is configured to distribute the different sample carriers to the different coverslipping units.

In another embodiment, the transport unit comprises one track for each of the coverslipping units. Each track runs from the receiving position to the imaging position, and from the imaging position to one of the coverslipping units. The transport unit is configured to move the sample carrier along each of the tracks. The transport unit may be further configured to distribute the imaged sample carriers onto different tracks, each track being associated with a different coverslipping unit. Thus, the different sample carriers may be provided with a coverslip by different coverslipping units each, parallelizing the coverslipping step of the overall workflow. This makes the device very efficient in processing large numbers of samples.

In another embodiment, the track of the transport unit comprises two parallel guide rails configured to guide the sample carrier. The guide rails align the movement of the sample carrier along the track, ensuring repeatable movements and accurate positioning, in particular at the imaging position.

In another embodiment, an optical path is provided between the two guide rails at the imaging position. The optical path allows light to pass between the two guide rails and enables the sample arranged atop the sample carrier to be imaged through the sample carrier from below while the guide rails accurately align the sample carrier for imaging. The optical path may be realized by an opening between the two guide rails. However, the optical path may further comprise optical elements such as filters, lenses and the like.

In another embodiment, the transport unit comprises an actuator arranged above the track and configured to move the sample carrier along the track. The actuator may be a drive belt, or a drive chain arranged above the guide rails. For example, the drive belt or the drive chain may comprise multiple sections arranged above different sections of the track. Using the actuator, the sample carrier is moved along the track. A drive belt ensures a smooth and consistent motion of the sample carrier. Additionally, the drive belt is quiet and dampens vibrations in the device.

In another embodiment, the drive belt comprises at least one catch configured to engage the sample carrier for moving the sample carrier along the track. The catch may be a protrusion extending from the drive belt. The catch grabs the sample carrier to move it along the movement direction of the drive belt, which is more reliable than using the friction between the drive belt and the sample carrier in order to grab the sample carrier.

In another embodiment, the transport unit comprises multiple tracks, and at least one track picker unit configured to move the sample carrier between different tracks. The track picker unit may be arranged at different positions along the track or tracks. For example, the track picker unit may be arranged at the receiving position to sort the sample carriers onto different tracks leading to different imaging positions. The track picker unit may also be arranged following the imaging positions in order to move the imaged sample carrier on a track leading to the coverslipping unit. Further, the track picker unit may be arranged behind the single imaging position to sort the imaged sample carriers onto different tracks leading to different coverslipping units. For example, the track picker unit may be a gripper unit. The gripper unit is a mechanically simple means for sorting the sample carriers, and for moving the sample carriers between different tracks, thereby enhancing workflow efficiency, and reducing the need for human intervention.

In another embodiment, the receiving position is configured to receive at least one rack, the rack being configured to receive multiple sample carriers, each being configured to carry a sample. The device further comprises a removal unit configured to remove the sample carriers from the rack, and to feed the removed sample carriers to the transport unit. The receiving position may be formed as part of a receiving compartment that is configured to receive at least one rack. In this embodiment, multiple samples may be fed to the device at once. The samples may then be automatically processed by the device, enhancing workflow efficiency, increasing walk-away time, and reducing the need for manual intervention. The samples may be processed in sequence or multiple samples may be processed in parallel, depending on the operational mode selected to optimize throughput and efficiency. The racks may be laboratory equipment used in the art for transporting uncovered microscope slides.

In another embodiment, the imaging position comprises at least one damper configured to receive the sample carrier, and to dampen the transmission of mechanical vibrations from the device to the sample carrier. The damper may comprise part of the track formed, for example, by the two parallel guide rails, which is mounted by a vibration dampening element, for example a spring, or a gas damper, or a combination thereof. The damper mechanically decouples the sample carrier currently received in the imaging position from the device and the environment. This realizes a vibration dampening that prevents vibrations of the device and/or the environment from affecting the sample carrier during imaging. As a result, the imaging unit is enabled to capture images of the sample with high resolution and sharpness.

In another embodiment, at least one of the imaging unit, and the coverslipping unit are provided as modules which are configured to be removeable from the device. The device may be provided with mounting elements, for example slotted rails or screw holes, enabling the modules to be securely mounted to the device. Likewise, each module may be provided with complementary mounting elements. Guiding elements, such as guide rails and linear bearings may be provided to align the modules with the device. Each module may comprise an electric interface configured to electrically connect the module to the device. The module comprising the imaging module may comprise the imaging position. Each module may comprise a housing encompassing other elements of the module. Providing the device as a modular device makes it possible to easily adapt the device to a change in throughput. For example, when many samples need to be processed, the device may be provided with additional modules providing additional imaging units and/or coverslipping units to enable the device to process multiple samples in parallel. Alternatively, the device is formed as a monolithic device wherein each element is an integral part of the device.

The invention further relates to a method for imaging and coverslipping using the device described above. The method comprises the following steps: a) Receiving at least one sample carrier comprising a sample in the receiving position. b) Moving the sample carrier to the imaging position using the transport unit. c) Imaging the sample through the sample carrier using the imaging unit arranged at the imaging position. d) Moving the sample carrier to the coverslipping unit using the transport unit. e) Applying a coverslip to the sample using the coverslipping unit.

Preferably, the sample carrier comprises no coverslip when the sample carrier is received in the receiving position. The method has the same advantages as the device described above. In particular, the method may be supplemented with the features described in this document in connection with the device. Furthermore, the device described above may be supplemented with the features described in this document in connection with the method.

### Short Description of the Figures

Hereinafter, exemplary embodiments are described referring to the drawings, wherein:
- Figure 1: is a schematic view of a device for imaging and coverslipping according to an embodiment;
- Figure 2: is a schematic view of the device for imaging and coverslipping according to another embodiment comprising multiple imaging positions;
- Figure 3: is a schematic view of the device for imaging and coverslipping according to yet another embodiment comprising multiple imaging positions and multiple coverslipping units;
- Figure 4: is a schematic view of an exemplary removal unit that may be part of the device for imaging and coverslipping;
- Figure 5: is a schematic cross section of two parallel tracks of a transport unit of the device for imaging and coverslipping;
- Figure 6: is a schematic top view of a section of a track of the transport unit of the device for imaging and coverslipping;
- Figure 7: is a schematic cross section of a part of the transport unit of the device for imaging and coverslipping;
- Figure 8: is a schematic cross section of an exemplary track picker unit of the device for imaging and coverslipping; and
- Figure 9: is a flowchart of a method for imaging and coverslipping.

### Detailed Description

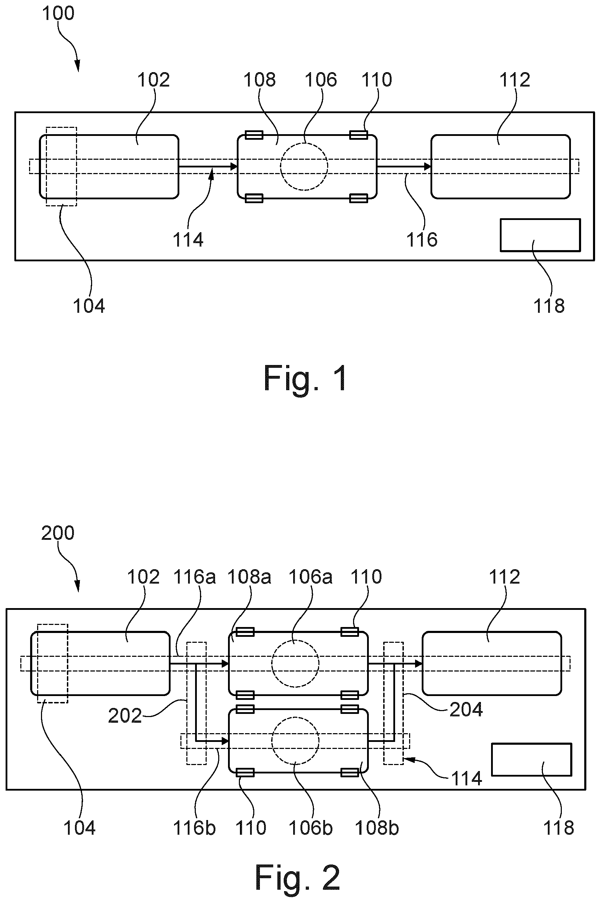

Figure 1 is a schematic view of a device 100 for imaging and coverslipping according to an embodiment. An exemplary use case for the device 100 is to implement a workflow in which the sample is provided on a sample carrier and imaged before the sample carrier is provided with a coverslip for archiving. The sample is a tissue section or thin section used in histological examinations in pathology and biomedical research.

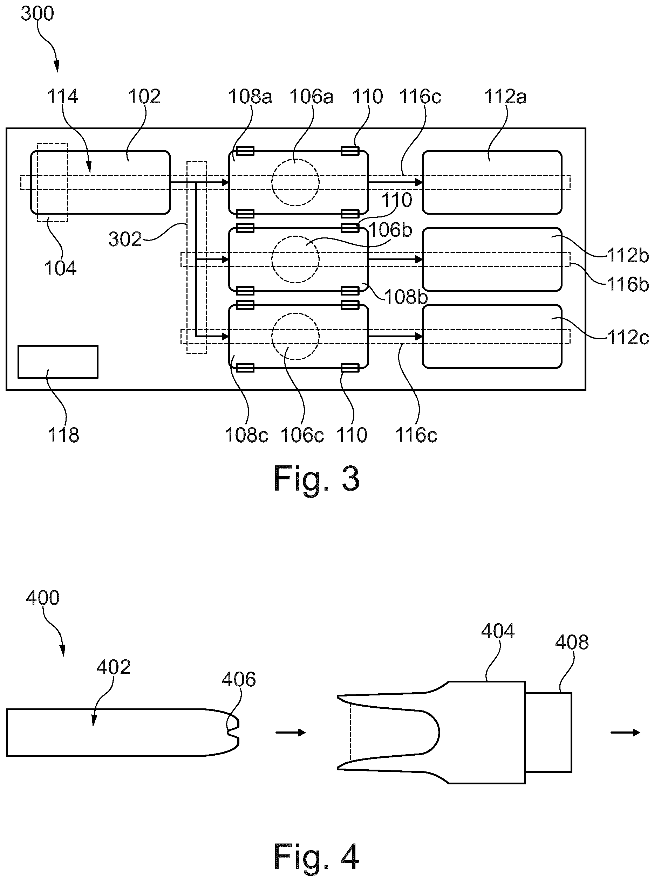

The device 100 comprises a receiving position 102 configured to receive at least one sample carrier 408 (c.f. Figure 4) mounting the sample. The sample carrier 408 may be a transparent microscope slide on which the sample is arranged. In an embodiment, the sample carrier 408 may comprise a frame mounting a flexible and transparent foil on which the sample is mounted. The sample may be a biological sample, such as a tissue section. The receiving position 102 may be formed as a receiving compartment into which the sample carrier 408 is placed to feed the sample carrier 408 to the device 100 for processing. In an embodiment, the receiving position 102 is configured to receive at least one rack 404 (c.f. Figure 4) which carries multiple sample carriers 408. Such racks 404 are used to carry and hold sample carriers 408, for example during a staining process. The receiving position 102 may further comprise a removal unit 104 configured to remove sample carriers 408 from the rack 404 in order to feed them to the device 100. An exemplary removal unit 400 that may be used with the device 100 is described below with reference to Figure 4.

The device 100 also comprises an imaging unit 106 for imaging the samples. The imaging unit 106 is exemplary arranged below an imaging position 108 of the device 100. The imaging unit 106 can image the samples from below through the sample carrier 408 when the sample carrier 408 is received in the imaging position 108. The imaging device 100 may be a microscope or similar optical unit configured to generate high-resolution digital images of the sample. In order to generate a detailed image of the sample, the imaging unit 106 may have a magnification in a range between five to a hundred times, in particular in a range between five and forty times.

The imaging position 108 exemplary comprises four dampers 110 which are configured to hold the sample carrier 408 during imaging. The dampers 110 are further configured to dampen the transmission of mechanical vibrations from the device 100 to the sample carrier 408, thereby minimizing the effect of external vibrations on the imaging. For that, the dampers 110 may comprise vibration dampening elements such as springs, gas dampers, or be made at least in part from materials that absorb and dissipate mechanical energy, such as rubber, silicone, or engineered polymers.

The device 100 also comprises a coverslipping unit 112 configured to apply a coverslip to the sample 408. The coverslip may be a small plastic or glass square applied to the sample carrier 408 atop the sample, which for example protects a biological sample from environmental influences. The coverslip may be fixed to the sample carrier 408 by a curable mounting medium such as an adhesive or a resin in a solvent. The coverslipping unit 112 may be configured to apply the mounting medium to the sample carrier 408 before applying the coverslip. Curing may be performed by evaporation or polymerization of the mounting medium and may take up to several days. After the mounting medium is sufficiently cured, the sample carrier 408 is ready for long time archival.

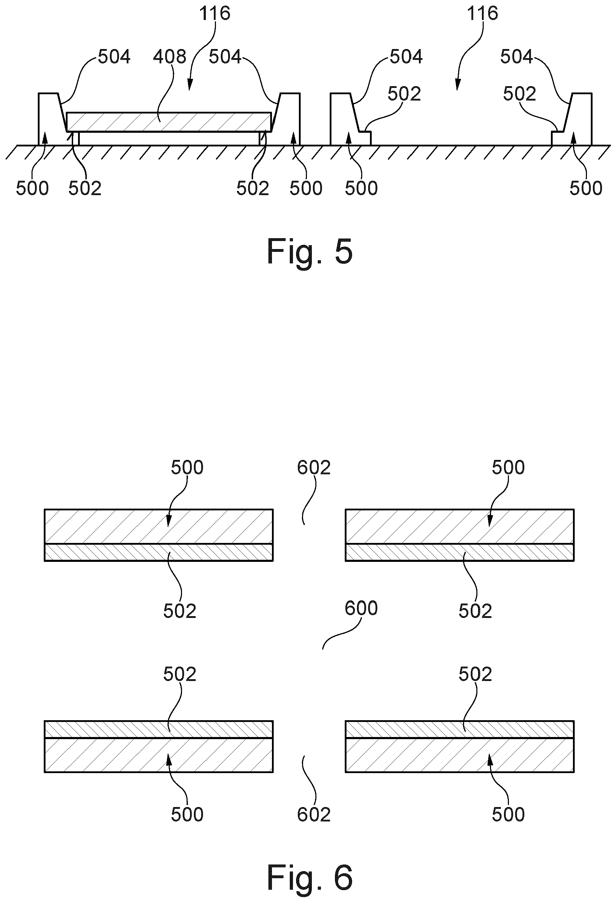

The device 100 further comprises a transport unit 114 for moving the sample carrier 408 from the receiving position 102 to the imaging position 108. In an embodiment, the transport unit 114 is configured to transport the sample carrier 408 from the imaging position 108 to the coverslipping unit 112. The transport unit 114 comprises at least one track 116 along which the sample carrier 408 is moved. Exemplary elements of the transport unit 114 and the track 116 in particular are described below with reference to Figures 5, 6, and 7.

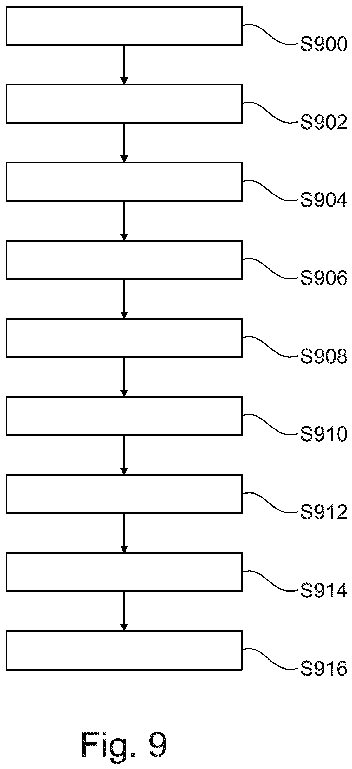

The device 100 may be controlled by a controller 118. The controller 118 may be part of the device 100 itself or may be formed by an external control device such as a computer connected to the device 100. In Figure 1, the controller 118 is exemplary shown as a part of the device 100. The removal unit 104, the imaging unit 106, the coverslipping unit 112, and the transport unit 114 are connected to the controller 118 and may be individually controlled by the controller 118. The controller 118 is in particular configured to control the device 100 for performing a method for imaging and coverslipping. The method is described below with reference to Figure 9.

Figure 2 is a schematic view of the device 200 for imaging and coverslipping according to another embodiment. The device 200 according to Figure 2 has two imaging positions 108a, 108b.

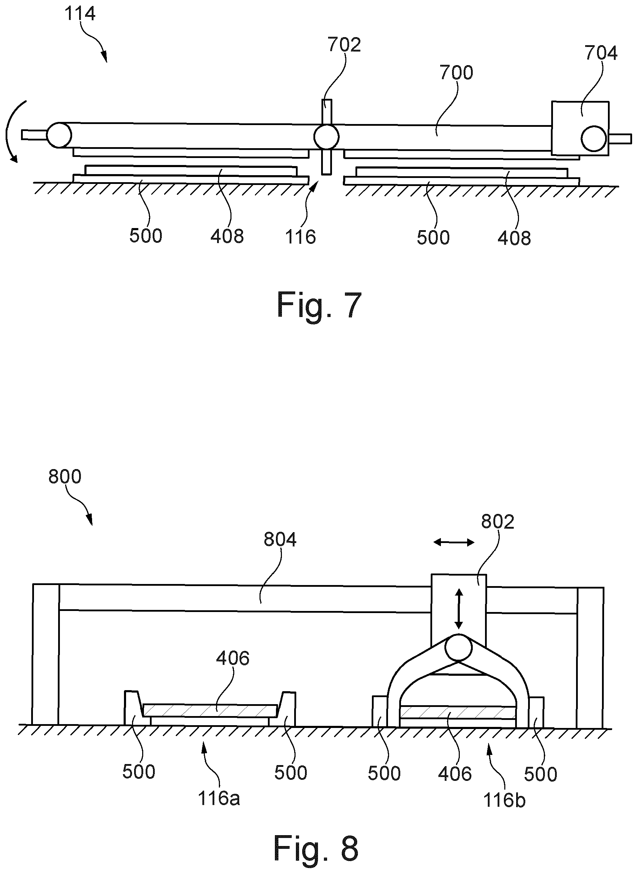

In the embodiment shown in Figure 2, the transport unit 114 comprises two tracks 116a, 116b. A first track 116a runs from the receiving position 102 to the coverslipping unit 112 via a first imaging position 108a, and a second track 116b runs from the receiving position 102 to the coverslipping unit 112 via a second imaging position 108b. The transport unit 114 also comprises a first track picker unit 202 arranged between the receiving position 102 and the two imaging positions 108a, 108b. Alternatively, the first track picker unit 202 may be arranged at the receiving position 102. The first track picker unit 202 is configured to grab the sample carriers 408 and to distribute the sample carriers 408 to either the first track 116a or the second track 116b, to be imaged at the first imaging position 108a, or the second imaging position 108b, respectively. The transport unit 114 further comprises a second track picker unit 204 arranged between the two imaging positions 108a, 108b and the coverslipping unit 112. Alternatively, the first track picker unit 202 may be arranged at the coverslipping unit 112.The second track picker unit 204 is configured to feed the imaged sample carriers 408 to the coverslipping unit 112. An exemplary track picker unit 800 is described below with reference to Figure 8.

As shown in Figure 2, the imaging positions 108a, 108b are provided with an imaging unit 106a, 106b arranged below the respective imaging position 108a, 108b for imaging the sample from below. The imaging units 106a, 106b may be identical, i.e. of the same type. In Figure 2, the two imaging positions 108a, 108b are exemplary arranged along the parallel tracks 116a, 116b and the two imaging units 106a, 106b are of the same type. Having multiple imaging positions 108a, 108b with identical imaging units 106a, 106b allows the device 200 to image several samples at the same time, thereby significantly speeding up the imaging step which typically takes more time than removing the sample carriers 408 from the rack 404 using the removal unit 104. In an embodiment, the imaging positions 108a, 108b may be arranged in series, and the imaging units 106a, 106b may be different, for example each realizing a different imaging modality such as brightfield imaging, fluorescence imaging, phase contrast imaging, or polarized light imaging. In an embodiment, each imaging position 108a, 108b is provided with an imaging unit 106a, 106b arranged below the respective imaging position 108a, 108b for imaging the sample from below.

Figure 3 is a schematic view of the device 300 for imaging and coverslipping according to yet another embodiment. The device 300 according to Figure 3 has three imaging positions 108a, 108b, 108c and three coverslipping units 112a, 112b, 112c.

In the embodiment shown in Figure 3, the transport unit 114 comprises three tracks 116a, 116b, 116c. A first track 116a runs from the receiving position 102 to a first imaging position 108a, and from the first imaging position 108a to a first coverslipping unit 112a. A second track 116b runs from the receiving position 102 to a second imaging position 108b, and from the second imaging position 108b to a second coverslipping unit 112b. A third track 116c runs from the receiving position 102 to a third imaging position 108c, and from the third imaging position 108c to a third coverslipping unit 112c. Compared to the device 200 shown in Figure 2, the device 300 shown in Figure 3 comprises only one track picker unit 302 arranged between the receiving position 102 and the three imaging positions 108a, 108b, 108c. Alternatively, the first track picker unit 202 may be arranged at the receiving position 102. The track picker unit 302 is configured to grab the sample carriers 408 and to distribute the sample carriers 408 to either of the three tracks 116a, 116b, 116c, to be imaged at the first imaging position 108a, the second imaging position 108b, or the third imaging position 108c, respectively. The track picker unit 302 may be the exemplary track picker unit 800 described below with reference to Figure 8.

In the embodiment shown in Figure 3, both the imaging positions 108a, 108b, 108c and the coverslipping units 112a, 112b, 112c are arranged along the parallel tracks 116a, 116b, 116c. The device 300 shown in Figure 3 can image several samples at the same time. In the device 300 according to Figure 3, each track 116a, 116b, 116c is provided not only with its own imaging unit 106a, 106b, 106c but also with its own coverslipping unit 112a, 112b, 112c, thereby speeding up the coverslipping process as well.

In the embodiments shown in Figures 1 to 3, the imaging units 106, 106a, 106b, 106c and/or the coverslipping units 112, 112a, 112b, 112c may be provided as part of modules that are configured to be removeable from the device 100, 200, 300. By providing the imaging unit 106, 106a, 106b, 106c as part of a module, different imaging modalities may be realized. The module comprising the imaging unit 106, 106a, 106b, 106c may also comprise the imaging position 108, 108a, 108b, 108c and/or the dampers 110, thereby forming an element of the device 100, 200, 300 that can be added or removed from the device 100, 200, 300 in order to manage higher or lower imaging throughput. Likewise, the module comprising the coverslipping unit 112, 112a, 112b, 112c may be added or removed from the device 100, 200, 300 in order to manage higher or lower throughput. This makes the device 100, 200, 300 easily adaptable to different needs.

Figure 4 is a schematic view of an exemplary removal unit 400 that may be part of the device 100, 200, 300 for imaging and coverslipping. The removal unit 400 comprises a tongue 402 that is moveable in order to push out the sample carrier 408 from the rack 404. In Figure 4, tongue 402 exemplary comprises a notch 406 which splits the tip of the tongue 402 in two. This minimizes contact between the tip of the tongue 402 and the sample carrier 408, while ensuring precise alignment and secure handling as the sample carrier 408 is pushed out from the rack 404. The direction of movement of both the tongue 402 and the pushed-out sample carrier 408 are shown in Figure 4 by two arrows. The sample carriers 408 that are pushed out by the tongue 402 are then received by the transport unit 114 of the device 100, 200, 300 in order to be further processed. Alternatively, the removal unit 400 is arranged outside the receiving position 102 and the sample carriers 408 are pushed into the receiving position 102 for further processing.

Figure 5 is a schematic cross section of two parallel tracks 116 of the transport unit 114 of the device 100, 200, 300 for imaging and coverslipping according to an embodiment. Each track 116 can include two parallel guide rails 500 on which the sample carrier 408 is received. In an embodiment, one or both guide rails 500 can have an L-shaped cross section and forms a ledge 502 for supporting the sample carrier 408 as well as a side surface 504 that guides the sample carrier 408 when the sample carrier 408 is moved along the track 116. In the embodiment shown in Figure 5, the side surface 504 is slightly angled to bias the sample carrier 408 towards the middle of the track 116.

Figure 6 is a schematic top view of a section of the track 116 of the transport unit 114 of the device 100, 200, 300 for imaging and coverslipping. The section of the track 116 is formed by the two parallel guide rails 500 which are described above with reference to Figure 5. An opening 600 is formed between the two guide rails 500, which makes it possible for the imaging unit 106, 106a, 106b, 106c to image the sample received on the sample carrier 408 from below. Further, the tracks 116 are interrupted by a gap 602, which allows the track picker unit to grab the sample carrier 408 to move it to a different track 116, for example.

Figure 7 is a schematic cross section of a part of the transport unit 114 of the device 100, 200, 300 for imaging and coverslipping. The shown part of the transport unit 114 comprises a section of track 116 comprising the two parallel guide rails 500 which are described above with reference to Figure 5. Above the track 116 section a drive belt 700 is arranged which forms at least part of an actuator for moving the sample carriers 408. The drive belt 700 comprises multiple catches 702, which are exemplary formed as protrusions extending outward from the drive belt 700. The catches 702 are configured to engage with the sample carriers 408 in order to move the sample carriers 408 along the movement direction of the drive belt 700. The drive belt 700 may be driven by one or more motors. The drive belt 700 shown in Figure 7 is exemplary provided with a single motor 704.

Figure 8 is a schematic cross section of an exemplary track picker unit 800 of the device 100, 200, 300 for imaging and coverslipping. In Figure 8, the track picker unit 800 is exemplary formed as a gripper unit arranged atop two parallel tracks 116a, 116b of the transport unit 114. The track picker unit 800 comprises a gripper head 802 that is configured to grab and release the sample carrier 408. The gripper head 802 can be moved up and down to lift the sample carrier 408 from the track 116a, 116b and to lower the sample carrier 408 onto the track 116a, 116b. Further, the gripper head 802 is mounted on a rail 804 running perpendicular above the tracks 116a, 116b and can be moved perpendicular to the tracks 116a, 116b, i.e. from left to right in Figure 8, in order to move the sample carrier 408 from one track 116a, 116b to the another.

Figure 9 is a flowchart of the method for imaging and coverslipping. The method shown is performed by the controller 118 by way of example only. The method may also be performed, at least in part, manually or by means of an external control device, such as a computer connected to the device 100, 200, 300.

Before the method is started, the sample is prepared for processing in the device 100, 200, 300. As an example, a biological sample is cut from a biopsy sample by means of a microtome, and then placed on the sample carrier 408. In order to be able to image the sample from below, the sample carrier 408 needs to be transparent or comprise a transparent section on which the sample is arranged. For example, the sample carrier 408 may be a transparent microscope slide made from glass, transparent plastic, transparent foil, and/or the like.

Preparing the sample may include arranging the sample carrier 408 and the sample arranged thereon into the rack 404. As part of the preparation, the biological sample may also be stained. For example, the biological sample is contacted with at least one staining reagent by submerging the rack 404 comprising multiple sample carriers 408 or individual sample carriers 408 comprising biological samples in the staining reagent. An example is the haematoxylin-eosin stain, during which the biological sample is contacted with an aqueous haematoxylin solution and an aqueous Eosin Y solution. This stains cell nuclei blue and cytoplasm and extracellular matrix pink.

Further, preparation may include a drying step in which the biological sample is contacted with a dehydration reagent. This may be required to remove water from the biological sample, for example as a step to conserve the biological sample. The dehydration reagent may in particular be required if the biological sample was contacted with an aqueous staining reagent. The dehydration reagent is a water-miscible solvent, in particular a water-miscible organic solvent, preferably ethanol. The dehydration reagent may be contacted with the biological sample in several subsequent dilutions with increasing concentrations of the dehydration reagent. For example, ethanol may be the dehydration reagent and initially applied to at a concentration of 75%, then a concentration of 95% may be applied, and a final concentration may be applied at essentially 100%. The drying step may also be performed as part of the method instead.

However, preparation does not include providing the sample with a coverslip. The coverslip is provided to the sample carrier 408 in step S914 of the method using the coverslipping unit 112, 112a, 112b, 112c. The sample carrier 408 and the sample are provided to the device 100, 200, 300 uncovered.

The method is started in step S900. In step S902 the sample carrier 408 with uncovered sample is received by the device 100, 200, 300. For example, the single sample carrier 408 may be placed in the receiving position 102 of the device 100, 200, 300. The sample carrier 408 may be placed manually or automatically, for example by means of a robotic device 100, 200, 300. Alternatively, the rack 404 is placed in the receiving position 102 of the device 100, 200, 300, thereby providing multiple sample carriers 408 to the device 100, 200, 300 at once. In the optional step S904 the controller 118 controls the removal unit 104 to remove at least one sample carrier 408 from the rack 404, and to feed the removed sample carrier 408 to the transport unit 114.

In step S906 the controller controls the transport unit 114 to move the sample carrier 408 from the receiving position 102 to the imaging position 108, 108a, 108b, 108c. This may include the transport unit 114 moving the sample carrier 408 along the single track 116 of the device 100, 200, 300. If the device 100, 200, 300 comprises more than one imaging position 108, 108a, 108b, 108c, step S908 may include the controller 118 controlling the track picker unit 202, 302, 800 to sort the sample carrier 408 into one of the multiple tracks 116, before instructing the transport unit 114 to move the sample carrier 408 to one of the imaging positions 108, 108a, 108b, 108c. In step S910 the controller 118 controls the imaging unit 106, 106a, 106b, 106c to capture an image of the sample through the sample carrier 408 from below. In this step, a high-resolution digital image of the biological sample is generated, for example, that may immediately be provided to a person tasked with analyzing the biological sample, such as a pathologist.

In step S912 the controller controls the transport unit 114 to move the sample carrier 408 from the imaging position 108, 108a, 108b, 108c to the coverslipping unit 112, 112a, 112b, 112c. Like in step S908, this may include the transport unit 114 moving the sample carrier 408 along the track 116 of the device 100, 200, 300. If necessary, the controller 118 controls the track picker unit 204, 800 to move the sample carrier 408 from one of the tracks 116 to the coverslipping unit 112, 112a, 112b, 112c. In step S914 the controller 118 controls the coverslipping unit 112, 112a, 112b, 112c to provide the sample carrier 408 with a coverslip. Step 914 may further comprise applying a mounting medium, such as an adhesive, to the sample carrier 408 before applying the coverslip. The process is then ended in step S916.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device 100, 200, 300 corresponds to a method step or a feature of a method step. Analogously, aspects described in the context of a method step also represent a description of a corresponding block or item or feature of a corresponding apparatus.

### Reference signs

- 100: Device
- 102: Receiving position
- 104: Removal unit
- 106, 106a, 106b, 106c: Imaging unit
- 108, 108a, 108b, 108c: Imaging position
- 110: Damper
- 112, 112a, 112b, 112c: Coverslipping unit
- 114: Transport unit
- 116, 116a, 116b, 116c: Track
- 118: Controller
- 200: Device
- 202, 204: Track picker unit
- 300: Device
- 302: Track picker unit
- 400: Removal unit
- 402: Tongue
- 404: Rack
- 406: Notch
- 408: Sample carrier
- 500: Guide rails
- 502: Ledge
- 504: Surface
- 600: Opening
- 602: Gap
- 700: Drive belt
- 702: Catch
- 704: Motor
- 800: Track picker unit
- 802: Gripper head
- 804: Rail

## Claims

1. A device (100, 200, 300) for imaging and coverslipping, comprising
a receiving position (102) configured to receive at least one sample carrier (408) configured to carry a sample;
an imaging position (108, 108a, 108b, 108c) configured to receive the sample carrier (408);
an imaging unit (106, 106a, 106b, 106c) arranged at the imaging position (108, 108a, 108b, 108c) and configured to image the sample through the sample carrier (408) when the sample carrier (408) is arranged in the imaging position (108, 108a, 108b, 108c);
a coverslipping unit (112, 112a, 112b, 112c) configured to apply a coverslip to the sample (408); and
a transport unit (114) comprising at least one track (116, 116a, 116b, 116c), and the transport unit (114) being configured to move the sample carrier (408) relative to the track (116, 116a, 116b, 116c) from the receiving position (102) to an imaging position (108, 108a, 108b, 108c), and from the imaging position (108, 108a, 108b, 108c) to the coverslipping unit (112, 112a, 112b, 112c).

2. The device (200, 300) according to claim 1, comprising more than one imaging position (108a, 108b, 108c) and more than one imaging unit (106a, 106b, 106c), each imaging unit (106a, 106b, 106c) being arranged at one of the imaging positions (108a, 108b, 108c) and configured to image the sample through the sample carrier (408) when the sample carrier (408) is arranged in the imaging position (108a, 108b, 108c) above said imaging unit (106a, 106b, 106c); wherein the transport unit (114) is configured to move the sample carrier (408) from the receiving position (102) to any one of the imaging positions (108a, 108b, 108c), and from each of the imaging positions (108a, 108b, 108c) to the coverslipping unit (112, 112a, 112b, 112c).

3. The device (200, 300) according to claim 2, wherein the transport unit (114) comprises one track (116a, 116b, 116c) for each of the imaging positions (108a, 108b, 108c), each track (116a, 116b, 116c) running from the receiving position (102) to one of the imaging positions (108a, 108b, 108c), and from this imaging position (108a, 108b, 108c) to the coverslipping unit (112, 112a, 112b, 112c); and wherein the transport unit (114) is configured to move the sample carrier (408) along each of the tracks (116a, 116b, 116c).

4. The device (300) according to any one of the preceding claims, comprising more than one coverslipping unit (112a, 112b, 112c); wherein the transport unit (114) is configured to move the sample carrier (408) from the imaging position (108a, 108b, 108c) to any one of the coverslipping units (112a, 112b, 112c).

5. The device (300) according to claim 4, wherein the transport unit (114) comprises one track (116a, 116b, 116c) for each of the coverslipping units (112a, 112b, 112c), each track (116a, 116b, 116c) running from the receiving position (102) to the imaging position (108a, 108b, 108c), and from the imaging position (108a, 108b, 108c) to one of the coverslipping units (112a, 112b, 112c); and wherein the transport unit (114) is configured to move the sample carrier (408) along each of the tracks (116a, 116b, 116c).

6. The device (100, 200, 300) according to any one of the preceding claims, wherein the track (116, 116a, 116b, 116c) of the transport unit (114) comprises two parallel guide rails (500) configured to guide the sample carrier (408).

7. The device (100, 200, 300) according to claim 6, wherein an optical path (600) is provided between the two guide rails (500) at the imaging position (108, 108a, 108b, 108c).

8. The device (100, 200, 300) according to any one of the preceding claims,
wherein the transport unit (114) comprises an actuator (700) arranged above the track (116, 116a, 116b, 116c) and configured to move the sample carrier (408) along the track (116, 116a, 116b, 116c).

9. The device (100, 200, 300) according to claim 8, wherein the actuator is a drive belt (700) or a drive chain comprising at least one catch (702) configured to engage the sample carrier (408) for moving the sample carrier (408) along the track (116, 116a, 116b, 116c).

10. The device (200, 300) according to any one of the preceding claims, wherein the transport unit (114) comprises multiple tracks (116a, 116b, 116c), and at least one track picker unit (202, 204, 302, 800) configured to move the sample carrier (408) between different tracks (116a, 116b, 116c).

11. The device (100, 200, 300) according to any one of the preceding claims, wherein the receiving position (102) is configured to receive at least one rack (404), the rack (404) being configured to receive multiple sample carriers (408), each being configured to carry a sample; and wherein the device (100, 200, 300) further comprises a removal unit (104) configured to remove the sample carriers (408) from the rack (404), and to feed the removed sample carriers (408) to the transport unit (114).

12. The device (100, 200, 300) according to any one of the preceding claims, wherein the imaging position (108, 108a, 108b, 108c) comprises at least one damper (110) configured to receive the sample carrier (408), and to dampen the transmission of mechanical vibrations from the device (100, 200, 300) to the sample carrier (408).

13. The device (100, 200, 300) according to any one of the preceding claims, wherein at least one of the imaging unit (106, 106a, 106b, 106c), and the coverslipping unit (112, 112a, 112b, 112c) is provided as modules which are configured to be removeable from the device (100, 200, 300).

14. A method for imaging and coverslipping using the device (100, 200, 300) according to any one of the claims 1 to 13, the method comprising the following steps:
a) receiving at least one sample carrier (408) comprising a sample in the receiving position (102);
b) moving the sample carrier (408) to the imaging position (108, 108a, 108b, 108c) using the transport unit (114);
c) imaging the sample through the sample carrier (408) using the imaging unit (106, 106a, 106b, 106c) arranged at the imaging position (108, 108a, 108b, 108c);
d) moving the sample carrier (408) to the coverslipping unit (112, 112a, 112b, 112c) using the transport unit (114); and
e) automatically applying a coverslip to the sample (408) using the coverslipping unit (112, 112a, 112b, 112c).
